# EUROPÄISCHE PATENTANMELDUNG

(11) **EP 1 335 327 A2**
(43) Veröffentlichungstag der Anmeldung: **13.08.2003**
(21) Anmeldenummer: 03000471.7
(22) Anmeldetag: 11.01.2003
(51) Int. Cl.: G07C 9/00

(54) **Karte zur Identifizierung eines Berechtigten über eine Lesevorrichtung, Verfahren zur Herstellung dieser Karte sowie Verfahren zur eindeutigen Identifizierung dieser Karte**

(30) Priorität: 08.02.2002 DE 10205440
(71) Anmelder: Deutsche Telekom AG, 53113 Bonn (DE); Circle Smart Card AG, 99099 Erfurt (DE)
(72) Erfinder: Fleischmann, Peter, 90461 Nürnberg (DE); Hopfenbeck, Stefan, 92533 Wernberg-Köblitz (DE); Proske, Reinhard, 92442 Wackersdorf (DE)

(57) **Zusammenfassung**

Die Erfindung betrifft eine Karte (10) zur Identifizierung eines Berechtigten über eine Lesevorrichtung mit über die Lesevorrichtung erfassbaren Identifikationsdaten, über welche die Identität der Karte (10) und somit der zugeordnete Berechtigte eindeutig festgelegt ist. Die Erfindung zeichnet sich dadurch aus, dass zumindest ein Teil der Identifikationsdaten durch in den Kartenwerkstoff eingebrachte Teile (18) eines anderen Werkstoffes gebildet werden, über deren Anordnung und/oder Ausbildung die Zuordnung zu einer Identität erfolgt.

## Beschreibung

Die Erfindung betrifft eine Karte zur Identifizierung eines Berechtigten über eine Lesevorrichtung gemäß der im Oberbegriff des Anspruches 1 angegebenen Art, ein Verfahren zur Herstellung dieser Karte gemäß dem Anspruch 11 sowie ein Verfahren zur eindeutigen Identifizierung dieser Karte nach dem Anspruch 15.

Karten zur Identifizierung eines Berechtigten über eine Lesevorrichtung weisen über die Lesevorrichtung erfassbare Identifikationsdaten auf. Über diese Identifikationsdaten ist die Identität der Karte und somit die Identität des zugeordneten Berechtigten eindeutig festgelegt.

Derartige Karten gewinnen aus Gründen der Sicherheit zunehmend an Bedeutung. Sie werden beispielsweise für die Zugangskontrolle zu Rechnern oder zu Gebäuden, im elektronischen Geldtransfer, beispielsweise im Zusammenwirken mit Geldausgabeautomaten oder als Kreditkarten, sowie für den Austausch von Daten eingesetzt.

Solche Karten gibt es als Prägekarten, bei denen die Identifikationsdaten in die Karte eingeprägt sind, als Chipkarte, die einen Prozessor sowie einen Speicher aufweisen, in dem die Identifikationsdaten abgelegt sind, als Magnetstreifenkarte, bei der die Identifikationsdaten in dem Magnetstreifen gespeichert sind, sowie als Karten mit optischen Informationen, die die Identifikationsdaten bilden. Zudem können die Identifikationsdaten auch mittels Ausstanzungen - Lochkarte - realisiert sein. Die jeweiligen Identifikationsdaten der Karten werden personalisiert und beim späteren Gebrauch wieder dem Benutzer/Berechtigten zugeordnet.

Diese Systeme sind relativ leicht manipulierbar. Ferner kann es vorkommen, dass redundante Daten erzeugt werden. Insbesondere können auch die Identifikationsdaten durch Magnetfelder zerstört werden, beispielsweise wenn diese in einem Magnetstreifen oder in Speicherchips bei den Chipkarten abgespeichert sind.

Der Erfindung liegt die Aufgabe zugrunde, eine Karte zur Identifizierung eines Berechtigten über eine Lesevorrichtung gemäß der im Oberbegriff des Anspruches 1 angegebenen Art, ein Verfahren zur Herstellung dieser Karte und ein Verfahren zur eindeutigen Identifizierung dieser Karte derart weiterzubilden, dass die Karte zum einen einfach herstellbar ist und zum anderen die Identifikationsdaten nicht manipulierbar sind. Die Identifikationsdaten müssen einzigartig und nicht duplizierbar sein.

Diese Aufgabe wird für die Karte zur Identifizierung durch die kennzeichnenden Merkmale des Anspruches 1 in Verbindung mit seinen Oberbegriffsmerkmalen, für das Verfahren zur Herstellung dieser Karte durch die Merkmale des Anspruches 11 und für das Verfahren zur eindeutigen Identifizierung dieser Karte durch die Merkmale des Anspruches 15 gelöst.

Der Erfindung liegt die Erkenntnis zugrunde, dass bei Vermischung von zwei Werkstoffen die Anordnung des einen Werkstoffes im anderen Werkstoff nie gleich ist und dieses Prinzip sich für die Bildung von Identifikationsdaten für Karten zur Identifizierung eines Berechtigten für eine Lesevorrichtung ausnutzen lässt.

Nach der Erfindung wird daher zumindest ein Teil der Identifikationsdaten durch in den Kartenwerkstoff eingebrachte Teile gebildet, über deren Anordnung - Lage und Anzahl - und/oder Ausbildung eine Zuordnung zu einer Identität erfolgt. Beispielsweise kann auch die Ausbildung der Teile unterschiedlich sein, sodass auch darüber die Identifikationsdaten gebildet werden. Über die Anordnung und Ausbildung der Teile ergeben sich unendlich viele Möglichkeiten, sodass der Forderung nach einer eindeutigen, individuellen und nicht duplizierbaren Art von Identifikationsdaten Rechnung getragen wird.

Gemäß einer Ausführungsform der Erfindung sind daher eine Vielzahl von Teilen so in den Kartenwerkstoff eingebracht, dass deren Anordnung und Ausbildung bei der Herstellung nach dem Zufallsprinzip erfolgt.

Um eine einfache Herstellung zu ermöglichen, weist der Kartenwerkstoff einen niedrigeren Schmelzpunkt auf als der Werkstoff der in den Kartenwerkstoff eingebrachten Teile. Hierdurch kann beispielsweise der Kartenwerkstoff für die Herstellung thermisch verflüssigt werden, ohne dass die eingebrachten Teile für die Identifikationsdaten selbst verflüssigen. Sie behalten vielmehr auf einfache Weise ihre Form und verteilen sich in der Schmelze nach dem Zufallsprinzip.

Beispielsweise können dabei die in den Kartenwerkstoff eingebrachten Teile aus Metall bestehen und insbesondere in Form von Metallsplittern ausgebildet sein.

Um weitere Möglichkeiten der Individualisierung zu schaffen, werden für die Bildung der Identifikationsdaten nicht nur die Anordnung und Ausbildung der Teile verwendet, sondern es wird auch geprüft, welche Teile magnetisiert und wie angeordnet sind. Aus diesem Grund ist zumindest ein Teil der in dem Kartenwerkstoff eingebrachten Teile magnetisiert.

Damit die Karte durch die zusätzlichen Teile für die Bildung der Identifikationsdaten nicht zu schwer wird, bestehen die in den Kartenwerkstoff eingebrachten Teile aus Aluminium und der Kartenwerkstoff wird vorzugsweise durch Kunststoff gebildet.

Der Kartenwerkstoff ist zumindest im für die Lesevorrichtung relevanten Bereich transparent ausgebildet. Hierdurch sind die Unterschiede zwischen den in den Kartenwerkstoff eingebrachten Teilen - nicht transparent - und dem Kartenwerkstoff - transparent - für das Lesegerät in der Anordnung im Kartenwerkstoff und Ausbildung der einzelnen Teile einfach auszumachen.

Gemäß einer Ausführungsform der Erfindung enthält die Karte weitere Funktionen und/oder Informationen und ist insbesondere als Prägekarte, Chipkarte, Magnetstreifenkarte, Karte mit optischen Informationen und/oder ähnlichem ausgebildet.

In den Kartenwerkstoff werden vor der Formgebung der Karte die Teile eingebracht. Dann erfolgt die Formgebung, wobei durch das Einbringen eine zufällige Anordnung der Teile im Kartenwerkstoff gewährleistet wird. Die Teile werden in den Kartenwerkstoff geschüttet und gemischt.

Beispielsweise, wenn die Karte mittels eines Spritzgießverfahrens hergestellt wird, werden die Teile in das Kunststoffgranulat vor dem Spritzgießen geschüttet und dann gemischt. Anschließend wird die Karte im Spritzgießverfahren hergestellt.

Bei der Identifizierung der erfindungsgemäßen Karte werden die Identifikationsdaten von der Lesevorrichtung erfasst, wobei zumindest bei der Ausgabe der Karte an den Benutzer/Berechtigten in einem vorbestimmten Bereich der Karte die Anordnung und/oder Ausbildung der Teile in den Kartenwerkstoff der Identität des Benutzers zugeordnet und als Identifikationsdaten abgespeichert werden und bei Überprüfung der Berechtigung die Anordnung und/oder die Ausbildung der Teile in dem Kartenwerkstoff in dem vorbestimmten Bereich von der Lesevorrichtung erfasst und mit den abgespeicherten Identifikationsdaten verglichen werden.

Weitere Merkmale und Vorteile ergeben sich aus der folgenden Beschreibung einer Ausführungsform der Erfindung im Zusammenhang mit der Zeichnung. Es zeigen:
- Fig. 1: eine Ansicht auf eine erste Seite der Karte gemäß einer Ausführungsform der Erfindung;
- Fig. 2: eine Ansicht auf die zweite Seite der Karte von Fig. 1; und
- Fig. 3: eine schematische Darstellung, die das Herstellungsverfahren der Karte nach der Erfindung veranschaulicht.

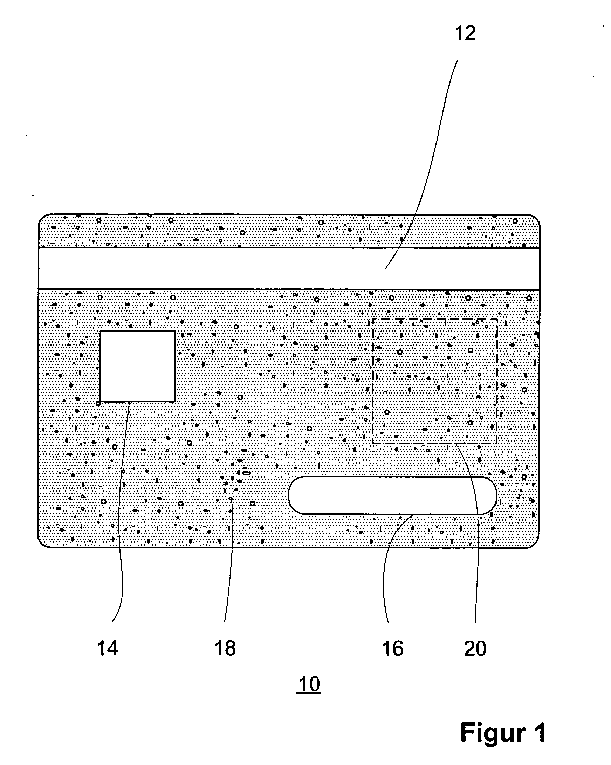

In Fig. 1 ist in einer Draufsicht eine Karte 10 nach der Erfindung dargestellt. Die Karte 10 weist einen Magnetstreifen 12 sowie einen Chip 14 auf. Zudem ist ein Scratch-Off-Feld 16 vorgesehen.

Der Magnetstreifen 12, der Chip 14 sowie das Scratch-Off-Feld 16 sind optional, d.h. je nach Anwendungsfall der Karte 10 kumulativ oder alternativ vorhanden.

Die Karte 10 dient zur Identifizierung eines Benutzers. Hierfür ist der Kartenwerkstoff aus einem transparenten Kunststoff ausgebildet und weist eine Vielzahl von unregelmäßig ausgebildeten sowie zufällig in dem Kartenwerkstoff angeordnete Aluminiumpartikel 18 auf. Durch die Anordnung und Ausbildung der Aluminiumpartikel 18 ist eine eindeutige, individuelle und nicht duplizierbare Kennung gegeben.

Eine hier nicht dargestellte Kartenlesevorrichtung liest beispielsweise den in Fig. 1 gestrichelten Bereich - den Erfassungsbereich 20 - aus, um über die Anordnung - Lage und Anzahl - und Ausbildung der Aluminiumpartikel die Kennung und somit die Identität des Benutzers festzustellen.

Zuvor wurde über die Lesevorrichtung die Anordnung und Ausbildung der Aluminiumpartikel 18 einer Identität, nämlich die des potentiellen Benutzers, zugeordnet. Bei einer Überprüfung der Identität erfasst dann die Lesevorrichtung den Erfassungsbereich 20 und vergleicht die Anordnung und Ausbildung der Aluminiumpartikel 18, die somit die Identifikationsdaten bilden, mit den abgespeicherten Daten. Stimmen die Daten überein, wird die Identität über ein erstes Signal bestätigt und dadurch beispielsweise ein Zugang zu einem Rechner gewährt. Stimmen die Daten nicht überein, wird die Identität über ein zweites Signal nicht bestätigt und beispielsweise der Zugang zu einem Rechner oder zu einem Gebäude verwehrt.

Gemäß einer anderen Ausführungsform können statt der Aluminiumpartikel 18 oder ergänzend zu den Aluminiumpartikeln 18 auch eisenhaltige Metallpartikel verwendet werden. Teile dieser einzelnen Eisenpartikel können zudem noch magnetisiert sein. Für die Zuordnung einer Identität und somit für die Kennzeichnung der Identifikationsdaten kommen somit nicht nur die Anordnung und die Ausbildung der Aluminiumpartikel 18 im Erfassungsbereich 20 in Frage, sondern auch die Anordnung - Lage und Zahl - der magnetisierten Eisenpartikel. Hierfür ist in der Lesevorrichtung ein entsprechender Sensor vorgesehen.

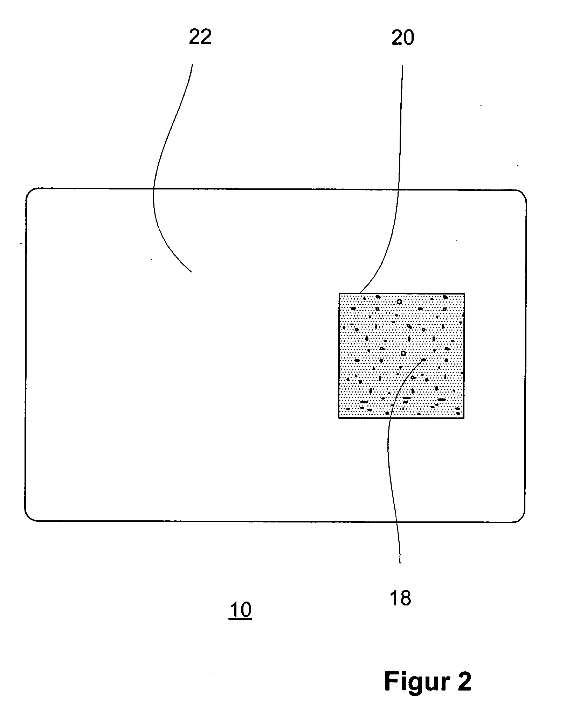

In Fig. 2 ist die Karte 10 von Fig. 1 mit ihrer Rückseite dargestellt. Bis auf den Erfassungsbereich 20 ist die Karte 10 auf dieser Seite beispielsweise mit einem Werbedruck 22 versehen. Letzten Endes ist nur der Erfassungsbereich 20 für die Erfassung der Identifikationsdaten durch die Anordnung und Ausbildung der Aluminiumpartikel 18 und ggf. der magnetisierten oder nicht magnetisierten Eisenpartikel in der Karte 10 von Interesse. Damit die Anordnung und Ausbildung der Aluminiumpartikel 18 auf einfache Weise erfasst werden kann, muss dieser Bereich durchgehend transparent sein. Beispielsweise kann nun durch Bestrahlen mit Licht von der einen Seite die Anordnung der Metallkörper einfach in der Lesevorrichtung detektiert und anschließend mit den abgespeicherten Daten verglichen werden. Hierfür wirkt die Lesevorrichtung mit einer Recheneinheit mit einem Datenspeicher zusammen.

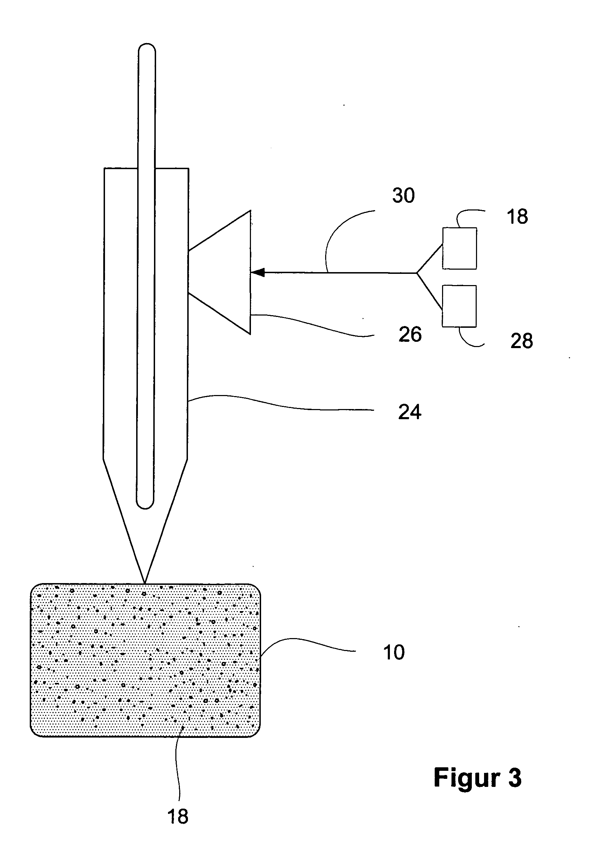

Gemäß Fig. 3 wird schematisch die Herstellung der Karte 10 nach der Erfindung dargestellt. Die Karte 10 besteht aus einem Kunststoff und wird mittels Spritzgießen hergestellt. Hierfür werden der Spritzgießvorrichtung 24 über eine Zuführung 26 sowohl Kunststoffgranulat 28 als auch die oben erwähnten Aluminiumsplitter 18 und ggf. magnetisierte Eisenpartikel zugegeben. Über einen Mischkanal 30 gelangt das Gemisch aus Aluminiumpartikeln 18 und Kunststoffgranulat 28 zur Spritzgießvorrichtung 24.

Das Kunststoffgranulat 28 hat einen erheblich geringeren Schmelzpunkt als die Aluminiumpartikel 18. In der Spritzgießvorrichtung 24 schmilzt das Kunststoffgranulat 28 und die Aluminiumpartikel 18 schwimmen in der Kunststoffschmelze. In bekannter Weise wird die Kunststoffschmelze nun mittels des Spritzgießverfahrens in eine Form gepresst, die eine Negativform zur herzustellenden Karte 10 bildet. Nach dem Spritzgießen und ggf. dem Behandeln der Kanten der Karte 10, ist die Karte 10 fertig. Je nach Anwendungsgebiet wird nun ein Magnetstreifen 12, ein Chip 14 und/oder ein Scratch-Off-Feld 16 aufgebracht. Zudem wird nun der Werbeaufdruck 22 aufgedruckt, der von der einen Seite den Erfassungsbereich 20 der Karte 10 begrenzt.

Durch die unterschiedliche Anzahl und die individuelle Lage der Aluminiumsplitter 28 entsteht eine einmalige Anordnung, die fest in der Karte 10 verankert ist und daher nicht manipuliert werden kann.

### BEZUGSZEICHENLISTE

- 10: Karte
- 12: Magnetstreifen
- 14: Chip
- 16: Scratch-Off-Feld
- 18: Aluminiumpartikel
- 20: Erfassungsbereich
- 22: Werbedruck
- 24: Spritzgießvorrichtung
- 26: Zuführung
- 28: Kunststoffgranulat
- 30: Mischkanal

## Patentansprüche

1. Karte (10) zur Identifizierung eines Berechtigten über eine Lesevorrichtung mit über die Lesevorrichtung erfassbaren Identifikationsdaten, über welche die Identität der Karte (10) und somit der zugeordnete Berechtigte eindeutig festgelegt ist, **dadurch gekennzeichnet, dass** zumindest ein Teil der Identifikationsdaten durch in den Kartenwerkstoff eingebrachte Teile (18) eines anderen Werkstoffes gebildet werden, über deren Anordnung und/oder Ausbildung die Zuordnung zu einer Identität erfolgt.

2. Karte nach Anspruch 1, **dadurch gekennzeichnet, dass** eine Vielzahl von Teilen (18) in den Kartenwerkstoff so eingebracht sind, dass deren Anordnung und Ausbildung bei der Herstellung nach dem Zufallsprinzip erfolgt.

3. Karte nach Anspruch 1 oder 2, **dadurch gekennzeichnet, dass** der Kartenwerkstoff einen niedrigeren Schmelzpunkt aufweist als der Werkstoff der in den Kartenwerkstoff eingebrachten Teile (18).

4. Karte nach Anspruch 3, **dadurch gekennzeichnet, dass** die in den Kartenwerkstoff eingebrachten Teile (18) aus Metall bestehen und insbesondere in Form von Metallsplittern ausgebildet sind.

5. Karte nach Anspruch 4, **dadurch gekennzeichnet, dass** zumindest ein Teil der in dem Kartenwerkstoff eingebrachten Teile (18) magnetisiert ist.

6. Karte nach Anspruch 4, **dadurch gekennzeichnet, dass** die Teile (18) aus Aluminium bestehen.

7. Karte nach einem der vorangehenden Ansprüche, **dadurch gekennzeichnet, dass** der Kartenwerkstoff durch Kunststoff (28) gebildet ist.

8. Karte nach Anspruch 7, **dadurch gekennzeichnet, dass** der Kartenwerkstoff zumindest im für die Lesevorrichtung relevanten Bereich (20) transparent ist.

9. Karte nach einem der vorangehenden Ansprüche, **dadurch gekennzeichnet, dass** weitere Funktionsteile vorhanden und/oder diese mit weiteren Informationen versehen ist.

10. Karte nach Anspruch 8, **gekennzeichnet durch** eine Ausbildung als Prägekarte, Chipkarte, Magnetstreifenkarte, Karte mit optischen Informationen und/oder ähnlichem.

11. Verfahren zur Herstellung einer Karte (10) nach einem der vorangehenden Ansprüche, **dadurch gekennzeichnet, dass** in den Kartenwerkstoff vor der Formgebung die Teile (18) eingebracht werden und dann die Formgebung erfolgt, wobei durch das Einbringen eine zufällige Anordnung der Teile (18) im Kartenwerkstoff gewährleistet wird.

12. Verfahren nach Anspruch 11, **dadurch gekennzeichnet, dass** die Teile (18) in den Kartenwerkstoff geschüttet werden.

13. Verfahren nach Anspruch 11 oder 12, **dadurch gekennzeichnet, dass** die Karte (10) in einem Spritzgießverfahren hergestellt wird.

14. Verfahren nach Anspruch 13, **dadurch gekennzeichnet, dass** die Teile (18) in Kunststoffgranulat (28) vor dem Spritzgießen geschüttet und mit diesem gemischt werden.

15. Verfahren zur eindeutigen Identifizierung einer Karte (10) nach einem der vorangehenden Ansprüche, bei dem die Identifikationsdaten von der Lesevorrichtung erfasst werden, wobei zumindest bei der Ausgabe der Karte (10) an einen Berechtigten zumindest in einem vorbestimmten Bereich (20) der Karte (10) die Anordnung und/oder Ausbildung der Teile (18) in dem Kartenwerkstoff dem Berechtigten als Identifikationsdaten zugeordnet und abgespeichert werden und bei Überprüfung die Anordnung und/oder die Ausbildung der Teile (18) in dem vorbestimmten Bereich (20) von der Lesevorrichtung erfasst und mit den abgespeicherten Identifikationsdaten verglichen werden.

16. Verfahren nach Anspruch 15, **dadurch gekennzeichnet, dass** bei Übereinstimmung der abgespeicherten Identifikationsdaten mit den erfassten Identifikationsdaten ein erstes Signal und bei Nichtübereinstimmung ein zweites Signal ausgelöst wird.
